# EUROPÄISCHE PATENTSCHRIFT

(11) **EP 3 651 281 B1**
(45) Veröffentlichungstag und Bekanntmachung des Hinweises auf die Patenterteilung: **28.07.2021**
(21) Anmeldenummer: 19195109.4
(22) Anmeldetag: 03.09.2019
(51) Int. Cl.: H01R 13/514, H02G 3/08, H02G 3/10

(54) **VERBINDUNGSANORDNUNG ZUR MODULAREN VERBINDUNG VON GEHÄUSEN**
CONNECTION ARRANGEMENT FOR MODULAR CONNECTION OF HOUSINGS
DISPOSITIF DE RACCORDEMENT DESTINÉ AU RACCORDEMENT MODULAIRE DE BOITIERS

(30) Priorität: 08.11.2018 DE 102018127976
(43) Veröffentlichungstag der Anmeldung: 13.05.2020
(73) Patentinhaber: PROVERTHA Connectors, Cables & Solutions GmbH, 75180 Pforzheim (DE)
(72) Erfinder: Schulz, Udo, 75180 Pforzheim (DE)
(74) Vertreter: Staeger & Sperling Partnerschaftsgesellschaft mbB

(56) Entgegenhaltungen:
- EP-A1- 3 109 097
- NL-C1- 1 018 599

## Beschreibung

Die Erfindung betrifft eine modulare Lösung zum Verbinden von wenigstens zwei oder vorzugsweise einer Mehrzahl an gleichartig oder ähnlich aufgebauten Kontaktträger- oder Verbindungsgehäusen bzw. Steckergehäusen, die sich zu einer gemeinsamen Anordnung modular und flexibel zusammenfügen lassen, so dass sich eine Vielzahl von möglichen Kontaktverbindungswegen durch die Gehäuse realisieren lassen.

Im Stand der Technik gibt es unterschiedliche Lösungen um Gehäuse bzw.

Steckverbindergehäuse mechanisch aneinander zu reihen. Hierzu gibt es üblicherweise Schwalbenschwanzverbindungen, um das eine Gehäuse jeweils an das benachbarte Gehäuse zu montieren.

Aus der EP 2179475 B1 ist zum Beispiel eine Lösung bekannt, bei der sich ein Gehäuse mit einer außenliegenden Verbindungskontur an dem nächsten Gehäuse festlegen lässt.

Nachteilig bei solchen Lösungen ist allerdings der Umstand, dass sich keine flächigen oder komplexen Anordnungen erzeugen lassen, um applikationsspezifisch eine gewünschte Leitungsverzweigung, eine Unterverteilung, einen Y-Verteiler oder dergleichen zu realisieren.

Es besteht allerdings ein zunehmender Bedarf nach flexiblen Lösungen zur Realisierung von elektrischen Verbindungen, die zumal einen bestimmten IP-Schutzgrad, wie z. B. IP 67 benötigen.

Eine modulare Gehäuseanordnung sowie zugehörige Verbindungsadapter sind beispielsweise aus der Schrift NL 1 018 599 C bekannt. Alternative Varianten eines Verbindungsadapters werden zudem durch die EP 3 109 097 A1 offenbart.

Der Erfindung liegt deshalb die Aufgabe zugrunde, ein modulares System bereit zu stellen, bei dem der Anwender einfach, kostengünstig und flexibel mit einer geringen Anzahl von unterschiedlichen Bauteilen nach seinen Bedürfnissen eine Vielzahl von gewünschten Leitungsverzweigungen realisieren kann.

Diese Aufgabe wird durch die Merkmalskombination gemäß Patentanspruch 1 gelöst.

Ein Grundgedanke der Erfindung liegt in der Kombination einer bestimmten Gehäusekonstruktion über einen spezifisch geformten Adapter, der gleichzeitig eine Kabeldurchführung integriert.

Erfindungsgemäß wird hierzu ein Verbindungsadapter gemäß Anspruch 1, eine modular aufgebaute Gehäuseanordnung gemäß Anspruch 3 und ein Verfahren zur Montage der Gehäuseanordnung gemäß Anspruch 7 vorgeschlagen.

Die modular aufgebaute Gehäuseanordnung ist aus wenigstens zwei oder mehreren, vorzugsweise quaderförmig ausgebildeten Gehäusen vorgesehen, wobei die Gehäuse über eine spezifische Verbindungsadapteraufnahme an einer flachen Gehäuseseitenwand verfügen, wobei die Verbindungsadapteraufnahme eine oben offene Öffnung in der Gehäuseseitenwand umfasst und jeweils wenigstens ein seitlicher Wandabschnitt die Öffnung jeweils seitlich begrenzt, wobei jeweils zwei Gehäuse so zueinander ausgerichtet sind, dass die jeweiligen Verbindungsadapteraufnahmen unmittelbar nebeneinander positioniert sind und ein Verbindungsadapter in die Verbindungsadapteraufnahmen eingeschoben ist, so dass zwei Haltearme des Verbindungsadapters die jeweils seitlichen Wandabschnitte hintergreifen und diese jeweils in eine der an dem Verbindungsadapter vorgesehenen Nuten hineinragen.

Ein Aspekt der Erfindung betrifft demnach die Ausgestaltung des Verbindungsadapters zum Zusammenwirken mit den Gehäusewänden der zu verbindenden Gehäuse.

Erfindungsgemäß wird hierzu ein Verbindungsadapter vorgeschlagen, der ausgebildet ist, um wenigstens zwei Gehäuse oder Steckverbindergehäuse zur Aufnahme elektrischer Verbindungsteile oder Leitungen miteinander zu verbinden, wobei die Gehäuse hierzu über wenigstens eine zur Form des Verbindungsadapters zumindest teilweise korrespondierende Verbindungsadapteraufnahme verfügen, um diese miteinander mechanisch zu verbinden, wobei der Verbindungsadapter wenigstens ein U-förmig geformtes Verbindungsadapterteil ausbildet, wobei an wenigstens zwei diametral gegenüberliegenden Außenseiten des Verbindungsadapters jeweils zwei Haltestege mit einer dazwischen liegenden Nut vorgesehen sind, welche einen Aufnahmeraum für je einen Gehäusewandabschnitt jedes Gehäuses aufweisen, derart, dass im montierten Zustand des Verbindungsadapters (10) in die gehäuseseitigen Verbindungsadapteraufnahmen jeweils zwei der Haltestege (an einer gemeinsamen Seite) im, in die Gehäuse montierten Zustand, je einen Gehäusewandabschnitt hintergreifen, so dass die Gehäuse aneinander fixiert sind. Durch diese spezielle Ausgestaltung lässt sich auch bei geeigneter Anpassung der Form oder durch die Verwendung von Dichtungen gleichzeitig eine dichte Anordnung von elektrischen Verbindungsgehäusen realisieren.

Der Verbindungsadapter ist aus einem ersten und einem zweiten Verbindungsadapterteil zusammengesetzt und verbindet im zusammengesetzten Zustand das zweite Verbindungsadapterteil zwei Schenkel des ersten Verbindungsadapterteils miteinander, so dass eine umfangsgeschlossene quaderförmige Form mit einer Öffnung zur Kabeldurchführung gebildet wird. Im nicht montierten Zustand lassen sich die beiden Adapterteile formschlüssig zusammenfügen, wobei bevorzugt im montierten Zustand (d.h. wenn zwei Gehäuse durch das Adapterteil miteinander im vollständig eingesteckten Zustand verbunden sind, ein Trennen der Adapterteile durch eine selbsthemmende Montage verhindert wird.

Ferner sind die Verbindungsadapterteile als hermaphroditische Gleichteile ausgebildet, was die benötigte Teilezahl an unterschiedlichen Teilen bei der Realisierung einer Gehäuseanordnung weiter reduziert.

Zudem weisen die Verbindungsadapterteile an jeweils einem Schenkel einen rampenartigen vorzugsweise mittig angeordneten Steg, weiter vorzugsweise an der Innenseite beginnend sich vom Schenkel in dessen Erstreckungsrichtung weg erstreckend Steg aufweisen, der sich im zusammengesetzten Zustand in eine entsprechende Ausnehmung am jeweils anderen Verbindungsadapterteil hinein erstreckt und dort vorzugsweise formschlüssig eingreift.

Besonders vorteilhaft ist eine Ausgestaltung, bei der sich die Haltestege jeweils über die gesamte Länge der Schenkel erstrecken, so dass die mechanische Verbindung betreffend Haltekräfte und mechanischer Robustheit optimiert ist.

Ein weiterer Aspekt der Erfindung betrifft eine Anordnung, wobei zwei benachbarte Gehäuse jeweils zwei an einer Seitenwand angebrachte Verbindungsadapteraufnahmen aufweisen und die beiden Gehäuse mit Hilfe von zwei Verbindungsadaptern miteinander verbunden sind. Dabei werden die Positionen der Verbindungsadapteraufnahmen bezogen auf die Abmessungen der Gehäuse so ausgelegt, dass sich jeweils eine gleichartige Anordnung an die dazu den Verbindungswänden quer verlaufenden Seitenwände der Gehäuse wieder angereiht werden können und besonders bevorzugt unmittelbar berührend an den benachbarten Gehäusewänden anliegen. Auf diese Weise lassen sich schachbrettartige Anordnungen von Gehäusen ausbilden.

Weiter vorteilhaft ist es, wenn sowohl in einer oder den Längsseitenwänden als auch in einer oder den Querseitenwänden der Gehäuse jeweils Verbindungsadapteraufnahmen vorgesehen sind, so dass sich auch komplexe geometrische Anordnungen realisieren lassen, bei dem Gehäuse mit entweder Längsseitenwänden und/oder Querseitenwänden miteinander verbunden sind.

In einer weiteren vorteilhaften Ausgestaltung der Erfindung ist vorgesehen, dass die Gehäuse abnehmbare und demontierbare Deckel aufweisen und die Verbindungsadapter bei Montage der Deckel, durch eine Deckelstruktur gegen Entnahme aus ihrer Montageposition gesichert sind.

Weiter ist mit Vorteil vorgesehen, dass die u-förmig gebildeten Verbindungsadapterteile der Verbindungsadapter (ohne Deckelteil) im, in ihrem jeweils zwei benachbarte Gehäuse, verbindenden Montagezustand so orientiert sind, dass diese nach oben offen sind und demnach die beiden Schenkel nach in Richtung der Gehäuseöffnung weisen, die sich ohne den Gehäusedeckel ergibt. Hierdurch entsteht ein stabiler Vormontagezustand, bei dem z. B. eine Leitungsverlegung einfach und bequem zu bewerkstelligen ist, da man die Leitungen in die oben offenen Verbindungsadapterteile einführen kann um danach das zweite Adapterteil (hier das Deckelelement) zu montieren.

Eine besonders geeignete Ausgestaltung der erfindungsgemäßen Anordnung sieht vor; dass die Gehäuse quaderförmig (mit rechteckigem oder quadratischem Grundriss) mit jeweils zwei sich parallel gegenüberliegenden flachen Seitenwänden sind. Weiter vorteilhaft ist es, wenn die Bodenfläche und die Deckelfläche jeweils in Parallelebenen angeordnet sind.

Ein weiterer Aspekt der vorliegenden Erfindung betrifft ein Verfahren zum Montieren einer wie zuvor beschriebenen Anordnung mit den folgenden Schritten:
a. Positionieren von wenigstens zwei miteinander zu verbindenden oben offenen Gehäuse derart, dass ihre jeweiligen Verbindungsadapteraufnahmen unmittelbar nebeneinander liegen und
b. Einsteckmontage je eines Verbindungsadapters oder Verbindungsadapterteils von oben in die Verbindungsadapteraufnahmen, so dass die beiden Gehäuse mittels des Verbindungsadapters mechanisch miteinander verbunden sind.

In einer vorteilhaften Ausgestaltung des Verfahrens ist weiter vorgesehen, dass nach der Einsteckmontage des oder der Verbindungsadapterteile das jeweils zweite Verbindungsadapterteil montiert wird und anschließend ein Deckel an der offenen Seite des Gehäuses montiert wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein erstes Ausführungsbeispiel eines zweiteiligen Verbindungsadapters in einer perspektivischen Ansicht
- Fig. 2: eine Ansicht eines Verbindungsadapterteils des Verbindungsadapters aus Figur 1,
- Fig. 3: eine weitere Ansicht des Verbindungsadapterteils des Verbindungsadapters aus Figur 1,
- Fig. 4: ein nicht erfindungsgemäßes Ausführungsbeispiel eines zweiteiligen Verbindungsadapters in einer perspektivischen Ansicht
- Fig. 5: eine Ansicht eines ersten Verbindungsadapterteils des Verbindungsadapters aus Figur 4,
- Fig. 6: eine Ansicht des zweiten Verbindungsadapterteils (Deckelelement) des Verbindungsadapters aus Figur 4,
- Fig. 7: eine perspektivische Ansicht einer beispielhaften Anordnung von drei Gehäusen und
- Fig. 8: eine Ansicht ähnlich der Figur 7, bei der die Gehäuse alle mit einem Deckel versehen sind.

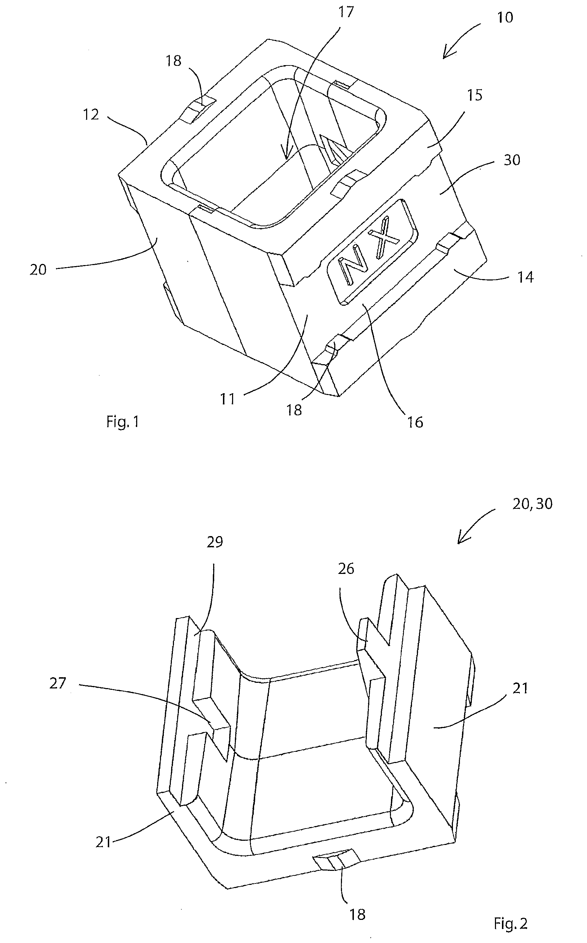

Im Folgenden wird die Erfindung mit Bezug auf die Figuren 1 bis 8 näher beschrieben, wobei gleiche Bezugszeichen in den Figuren auf gleiche strukturelle und/oder funktionale Merkmale hinweisen.

In den Figuren 1 bis 3 ist ein erstes Ausführungsbeispiel eines zweiteiligen Verbindungsadapters 10 bzw. dessen Verbindungsadapterteilen 20, 30 in einer jeweils perspektivischen Ansicht gezeigt.

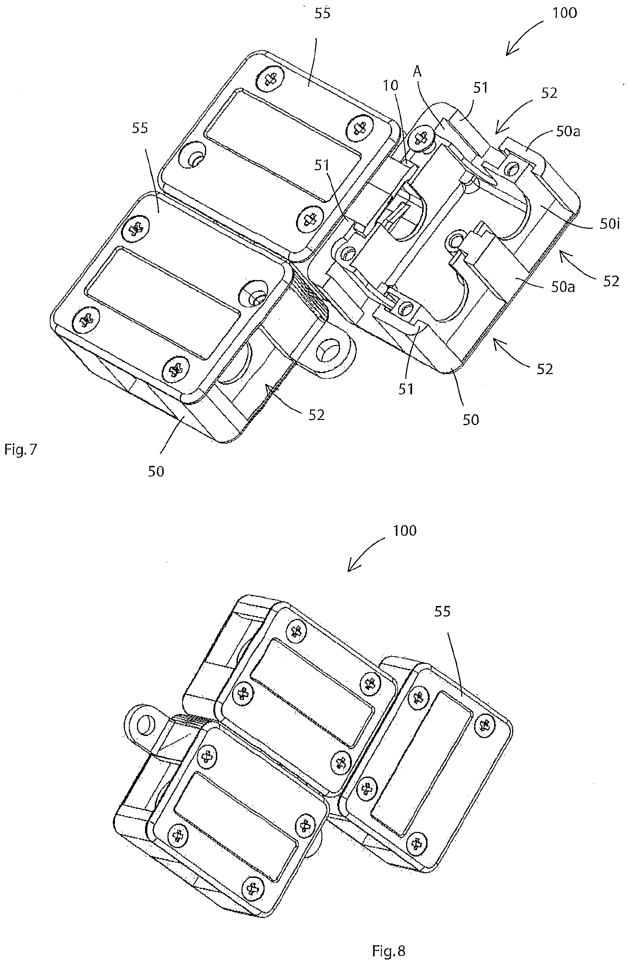

Der Verbindungsadapter 10 ist ausgebildet, um in zwei Verbindungsadapteraufnahmen 52 jeweils benachbarter Gehäuse 50, wie in der Figur 7 näher gezeigt, eingefügt zu werden, um die benachbarten Gehäuse 50 miteinander mechanisch zu verbinden.

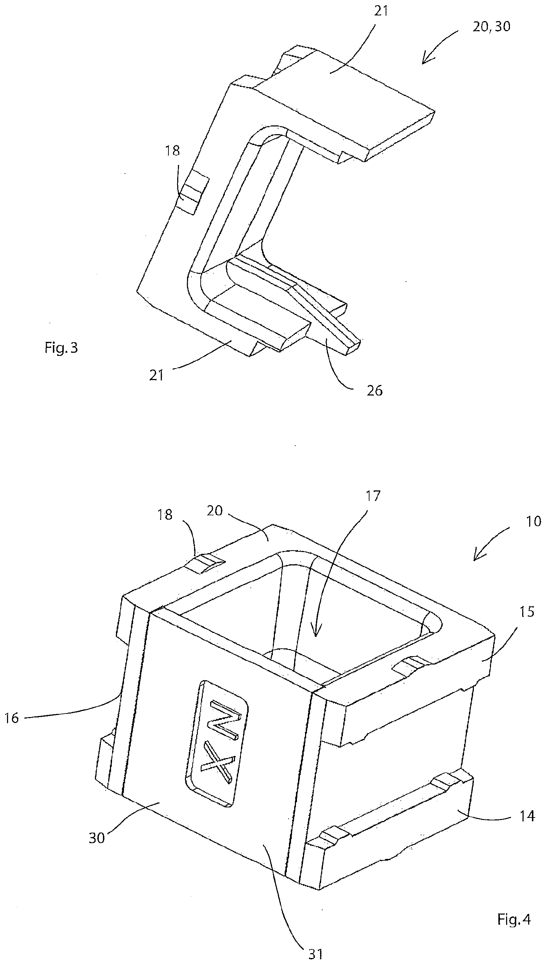

In den Figuren 4 bis 6 ist ein nicht erfindungsgemäßes Ausführungsbeispiel eines zweiteiligen Verbindungsadapters 10 bzw. dessen Verbindungsadapterteilen 20, 30 in einer jeweils perspektivischen Ansicht gezeigt.

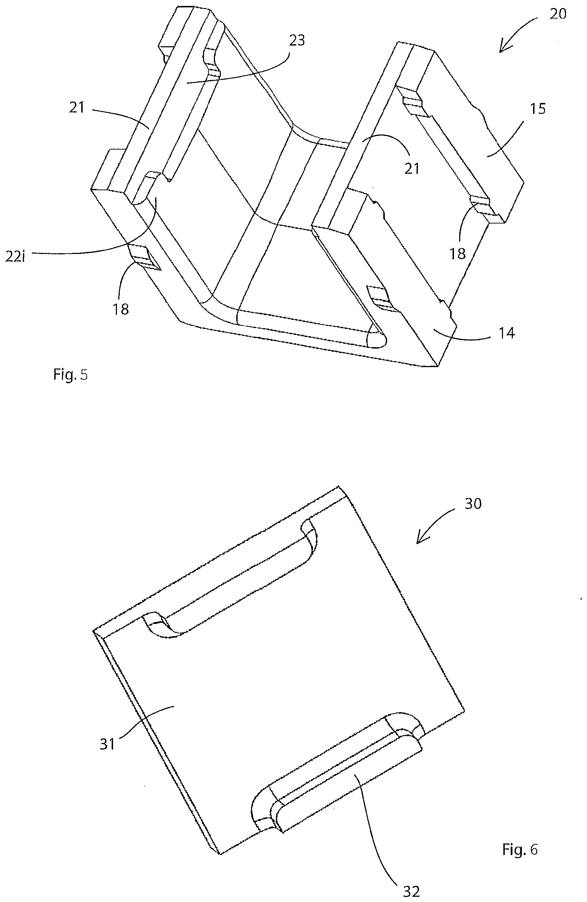

Bei der Ausführung gemäß den Figuren 1 bis 3 sind die beiden Verbindungsadapterteile des zweiteiligen Verbindungsadapters 10 als hermaphroditische Gleichteile ausgebildet, was bedeutet, dass aus dem Verbundungsadapterteil 20, durch zusammenstecken mit einem weiteren gleichen Verbindungsadapterteil 30 der in der Figur 1 gezeigte Verbindungsadapter 10 gebildet wird. Bei der Ausführung gemäß den Figuren 4 bis 5 sind die beiden Verbindungsadapterteile 20, 30 als unterschiedliche Teile ausgebildet, wobei hier das zweite Verbindungsadapterteil 30, wie in der Figur 6 gezeigt, als ein Deckelelement ausgebildet ist.

Dieser Verbindungsadapter 10 besitzt demnach jeweils ein U-förmig geformtes erstes Verbindungsadapterteil 20, wobei an wenigstens zwei diametral gegenüberliegenden Außenseiten 11, 12 des Verbindungsadapters 10 jeweils zwei Haltestege 14, 15 mit einer dazwischen liegenden Nut 16 vorgesehen sind, welche einen Aufnahmeraum für je einen Gehäusewandabschnitt 51 jedes Gehäuses 50 aufweist.

Im montierten Zustand des Verbindungsadapters 10 hintergreifen (in beiden Ausführungsformen) die gehäuseseitigen Verbindungsadapteraufnahmen 52 jeweils die zwei der Haltestege 14, 15 mit je einem Gehäusewandabschnitt 51, so dass die betreffenden Gehäuse 50 aneinander fixiert sind.

Wie in der Figur 7 dargestellt besitzt hierzu jedes Gehäuse 50 eine äußere Gehäusewand 50a und eine dazu versetzte innere Gehäusewand 50i. Die Haltestege 14, 15 tauchen im montierten Zustand in die Aufnahmen A im Gehäuse 50 ein, die zwischen dem Gehäusewandabschnitt 51 (gebildet von der äußeren Gehäusewand 50a) und der innere Gehäusewand 50i vorgesehen sind. Dadurch ragen die Gehäusewandabschnitt 51 jeweils in die Nuten 16 zwischen den Haltestegen 14, 15 ein. Die innere Gehäusewand 50i ist im Bereich der jeweiligen Verbindungsadapteraufnahmen 52 mit einer Kabeldurchführung 54 versehen.

In der Figur 7 ist bei demjenigen Gehäuse 50, bei dem kein Deckel montiert ist, erkennbar, dass in der vorderen Seitenwand zwei nebeneinander angebrachte Verbindungsadapteraufnahmen 52 vorgesehen sind, währen in der gegenüberliegenden (hinteren) Seitenwand nur eine Verbindungsadapteraufnahme 52 vorgesehen ist. In dieser ist ein Verbindungsadapter 10 mit einer Deckelplatte 30 montiert.

Die Verbindungsadapter 10 sind so ausgebildet, dass im zusammengesetzten Zustand das jeweils zweite Verbindungsadapterteil 30 jeweils die zwei Schenkel 21 des ersten Verbindungsadapterteils 20 miteinander verbindet, so dass eine umfangsgeschlossene quaderförmige Form mit einer Öffnung 17 zur Kabeldurchführung gebildet wird.

Bei der ersten Ausführungsvariante, bei dem der Verbindungsadapter 10 aus zwei gleichen hermaphroditisch geformten Verbindungsadapterteilen 20, 30 gebildet ist, weisen die Verbindungsadapterteile 20, 30 an jeweils einem Schenkel 21 einen rampenartigen vorzugsweise mittig angeordneten Steg auf, an der Innenseite beginnend, sich vom Schenkel 21 in dessen Erstreckungsrichtung weg erstreckender Steg 26 auf, der sich im zusammengesetzten Zustand in eine entsprechende Ausnehmung 27 am jeweils anderen Verbindungsadapterteil 20, 30 hinein erstreckt. Beide Schenkel 21 besitzen ein jeweils abgestuftes Schenkelende 29.

Bei dem zweiten Ausführungsbeispiel ist das zweite Verbindungsadapterteil 30 eine die beiden Schenkel 21 verbindende Deckelplatte 31.

Diese weist zwei seitliche aus der Plattenebene der Deckelplatte 31 hervorstehende Stege 32 auf, die im zusammen montierten Zustand des Verbindungsadapters 10 jeweils in an den Schenkeln 21 endseitig ausgebildete Aufnahmetaschen 23 hineingreifen. Ferner besitzen die Schenkel 21 einen Absatz 24 an jeder Schenkelinnenseite 22i als Auflager für die Unterseite der Deckelplatte 31. Im zusammen montierten Zustand des Verbindungsadapters 10 lagert die Deckelplatte 31 mit ihrer Unterseite auf dem Absatz 24 auf.

Die Haltestege 14, 15 erstrecken sich jeweils über die gesamte Länge der Schenkel 21. Wie in den Figuren weiter zu erkennen, sind an den Anlageflächen jeweils Nasen bzw. Klemmelemente 18 vorgesehen, um eine definierte Anlage und damit eine kraftschlüssige Verbindung zwischen den Gehäusen und dem Verbindungsadapter 10 zu realisieren.

Die Gehäuse 50 besitzen in dem Ausführungsbeispiel mittels Schrauben abnehmbare und demontierbare Deckel 55, welche die Verbindungsadapter 10 bei Montage der Deckel 55 gegen Entnahme aus ihrer Montageposition sichern .

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verbindungsadapter (10) ausgebildet, um wenigstens zwei Gehäuse oder Steckverbindergehäuse (50) zur Aufnahme elektrischer Verbindungsteile, die über wenigstens eine zur Form des Verbindungsadapters (1) zumindest teilweise korrespondierende Verbindungsadapteraufnahme (52) verfügen, miteinander mechanisch zu verbinden,
wobei der Verbindungsadapter (10) zwei U-förmig geformte Verbindungsadapterteile (20) ausbildet,
wobei an wenigstens zwei diametral gegenüberliegenden Außenseiten (11, 12) des Verbindungsadapters (10) jeweils zwei Haltestege (14, 15) mit einer dazwischen liegenden Nut (16) vorgesehen sind, welche einen Aufnahmeraum für je einen Gehäusewandabschnitt (51) jedes Gehäuses (50) aufweist, derart, dass im montierten Zustand des Verbindungsadapters (10) in die gehäuseseitigen Verbindungsadapteraufnahmen (52) jeweils zwei der Haltestege (14, 15) je einen Gehäusewandabschnitt (51) hintergreifen, so dass die Gehäuse (50) aneinander fixiert sind,
wobei der Verbindungsadapter (10) aus einem ersten und einem zweiten Verbindungsadapterteil (20, 30) zusammengesetzt ist, welche als hermaphroditische Gleichteile ausgebildet sind,
wobei im zusammengesetzten Zustand das zweite Verbindungsadapterteil (30) zwei Schenkel (21) des ersten Verbindungsadapterteils (20) miteinander verbindet, so dass eine umfangsgeschlossene quaderförmige Form mit einer Öffnung zur Kabeldurchführung gebildet wird,
**dadurch gekennzeichnet, dass**
die zwei Verbindungsadapterteile (20, 30) an jeweils einem Schenkel (21) einen rampenartigen Steg aufweisen, der sich im zusammengesetzten Zustand in eine entsprechende Ausnehmung am jeweils anderen Verbindungsadapterteil (20, 30) hinein erstreckt.

2. Verbindungsadapter nach Anspruch 1,
wobei der rampenartige Steg an dem Schenkel (21) mittig angeordnet ist.

3. Verbindungsadapter nach Anspruch 1 oder 2,
wobei der rampenartige Steg sich an der Innenseite des Schenkels (21) beginnend vom Schenkel (21) in dessen Erstreckungsrichtung weg erstreckt.

4. Verbindungsadapter (10) nach einem der vorhergehenden Ansprüche, **dadurch gekennzeichnet, dass** sich die Haltestege (14, 15) jeweils über die gesamte Länge der Schenkel (21) erstrecken.

5. Modular aufgebaute Gehäuseanordnung (100) aus wenigstens zwei oder mehreren Gehäusen (50), wovon jedes Gehäuse (50) über eine Verbindungsadapteraufnahme (52) an einer flachen Gehäuseseitenwand (53) verfügt, wobei die Verbindungsadapteraufnahme (52) eine oben offene Öffnung in der Gehäuseseitenwand (53) umfasst und jeweils wenigstens ein seitlicher Wandabschnitt (54) die Öffnung jeweils seitlich begrenzt, wobei die beiden Gehäuse (50) so zueinander ausgerichtet sind, dass die Verbindungsadapteraufnahme (52) unmittelbar nebeneinander positioniert sind und ein Verbindungsadapter (10) gemäß einem der vorhergehenden Ansprüche in die Verbindungsadapteraufnahmen (52) eingeschoben ist, so dass zwei Haltearme (14, 15) des Verbindungsadapters (10) die jeweils seitlichen Wandabschnitt (54) hintergreifen und diese jeweils in eine der Nuten (16) hineinragen.

6. Anordnung (100) gemäß Anspruch 5, wobei zwei benachbarte Gehäuse (50) jeweils zwei an einer Seitenwand angebrachte Verbindungsadapteraufnahmen (52) aufweisen und die beiden Gehäuse (50) mit Hilfe von zwei Verbindungsadaptern (10) miteinander verbunden sind.

7. Anordnung (100) gemäß Anspruch 5 oder 6, wobei die Gehäuse (50) abnehmbare und demontierbare Deckel (55) aufweisen und die Verbindungsadapter (10) bei Montage der Deckel (55) gegen Entnahme aus ihrer Montageposition gesichert sind.

8. Anordnung (100) nach einem der Ansprüche 5 bis 7, **dadurch gekennzeichnet, dass** die Gehäuse quaderförmig mit jeweils zwei sich parallel gegenüberliegenden flachen Seitenwänden darstellen.

9. Verfahren zum Montieren einer Anordnung nach einem der Ansprüche 5 bis 8 mit den folgenden Schritten:
a. Positionieren von wenigstens zwei miteinander zu verbindenden oben offenen Gehäuse (50) derart, dass ihre jeweiligen Verbindungsadapteraufnahmen (52) unmittelbar nebeneinander liegen und
b. Einsteckmontage je eines Verbindungsadapters (10) nach einem der Ansprüche 1 bis 4 von oben in die Verbindungsadapteraufnahmen (52), so dass die beiden Steckverbindergehäuse (50) mittels des oder der Verbindungsadapter (10) mechanisch miteinander verbunden sind.

10. Verfahren nach Anspruch 9, wobei nach der Einsteckmontage des oder der Verbindungsadapter (10) ein Deckel an der offenen Seite der Steckverbindergehäuse (50) montiert wird.

## Claims

1. A connection adapter (10) that is designed to mechanically interconnect at least two housings or plug connector housings (50) for receiving electric connecting parts having at least one connection adapter receptacle (52) that corresponds at least partially to the shape of the connection adapter (1),
wherein the connection adapter (10) forms two U-shaped connection adapter parts (20),
wherein two retaining webs (14, 15) with an interposed groove (16) are provided on at least two diametrically opposed outer sides (11, 12) of the connection adapter (10), which retaining webs (14, 15) provide a receiving space for one housing wall section (51) of each housing (50) in such a way that, when the connection adapter (10) is in the installed state, two of the retaining webs (14, 15) respectively engage behind a housing wall section (51) in the connection adapter receptacles (52) on the housing side, thereby fixing the housings (50) to one another,
wherein the connection adapter (10) is composed of a first and a second connection adapter part (20, 30) that are embodied as identical hermaphroditic parts,
wherein, in the assembled state, the second connection adapter part (30) interconnects two legs (21) of the first connection adapter part (20), thereby forming a circumferentially closed cuboid shape with an opening for feeding cable through,
**characterized in that** the two connection adapter parts (20, 30) each have a ramp-like web on one leg (21) which, in the assembled state, extends into a corresponding recess on the respective other connection adapter part (20, 30).

2. The connection adapter as set forth in claim 1, wherein the ramp-like web is arranged centrally on the leg (21).

3. The connection adapter as set forth in claim 1 or 2, wherein the ramp-like web extends away on the inside of the leg (21) starting from the leg (21) in the direction of extension thereof.

4. The connection adapter (10) as set forth in any one of the preceding claims, **characterized in that** the retaining webs (14, 15) each extend over the entire length of the legs (21).

5. A modular housing arrangement (100) of at least two or more housings (50), each housing (50) having a connection adapter receptacle (52) on a flat housing side wall (53), wherein the connection adapter receptacle (52) has an opening in the housing side wall that is open at the top (53) and at least one respective lateral wall section (54) respectively delimits the opening laterally, the two housings (50) being aligned with one another in such a way that the connection adapter receptacles (52) are positioned directly next to one another and a connection adapter (10) as set forth in any one of the preceding claims is inserted into the connection adapter receptacles (52), so that two holding arms (14, 15) of the connection adapter (10) engage behind the respective lateral wall portion (54) and extend respectively into one of the grooves (16).

6. The arrangement (100) as set forth in claim 5, wherein two adjacent housings (50) each have two connection adapter receptacles (52) affixed to a side wall and the two housings (50) are interconnected by means of two connection adapters (10).

7. The arrangement (100) as set forth in claim 5 or 6, wherein the housings (50) have removable and demountable covers (55) and the connection adapters (10) are secured against removal from their installed position when the covers (55) are installed.

8. The arrangement (100) as set forth in any one of claims 5 to 7, **characterized in that** the housings are cuboid-shaped, each with two parallel, opposing flat side walls.

9. A method for installing an arrangement as set forth in any one of claims 5 to 8, comprising the following steps:
a. Positioning of at least two open-topped housings (50) to be interconnected such that their respective connection adapter receptacles (52) are immediately adjacent to one another, and
b. plug-in installation of a respective connection adapter (10) as set forth in any one of claims 1 to 4 from above into the connection adapter receptacles (52) so that the two connector housings (50) are mechanically interconnected by means of the connection adapter or connection adapters (10).

10. The method as set forth in claim 9, wherein, after the plug-in installation of the connection adapter or adapters (10), a cover is installed on the open side of the connector housing (50).

## Revendications

1. Adaptateur de raccordement (10), réalisé pour raccorder mécaniquement au moins deux boîtiers ou boîtiers de connecteur enfichable (50) destinés à recevoir des pièces de raccordement électrique et qui disposent d'au moins un logement d'adaptateur de raccordement (52) correspondant au moins partiellement à la forme de l'adaptateur de raccordement (1),
l'adaptateur de raccordement (10) réalisant deux parties d'adaptateur de raccordement (20) formées en forme de U,
dans lequel, sur au moins deux faces extérieures (11, 12) diamétralement opposées de l'adaptateur de raccordement (10), sont prévues respectivement deux nervures de retenue (14, 15) dotées d'une rainure (16) intermédiaire qui présente un espace de réception pour respectivement une section de paroi de boîtier (51) de chaque boîtier (50) de telle sorte qu'à l'état monté de l'adaptateur de raccordement (10), respectivement deux des nervures de retenue (14, 15) saisissent respectivement une section de paroi de boîtier (51) par l'arrière dans les logements d'adaptateur de raccordement (52) côté boîtier de sorte que les boîtiers (50) sont fixés l'un à l'autre,
l'adaptateur de raccordement (10) étant assemblé à partir d'une première et d'une deuxième partie d'adaptateur de raccordement (20, 30) qui sont réalisées sous la forme de pièces identiques hermaphrodites,
dans lequel, à l'état assemblé, la deuxième partie d'adaptateur de raccordement (30) raccorde deux branches (21) de la première partie d'adaptateur de raccordement (20) l'une à l'autre de façon à former une forme parallélépipédique fermée en circonférence avec une ouverture pour un passage de câble,
**caractérisé en ce que** les deux parties d'adaptateur de raccordement (20, 30) présentent sur respectivement une branche (21) une nervure de type rampe qui, à l'état assemblé, fait saillie dans un évidement correspondant sur l'autre partie d'adaptateur de raccordement (20, 30) respectivement.

2. Adaptateur de raccordement selon la revendication 1, dans lequel la nervure de type rampe est disposée au centre sur la branche (21).

3. Adaptateur de raccordement selon la revendication 1 ou 2, dans lequel la nervure de type rampe s'éloigne sur la face intérieure de la branche (21) en partant de la branche (21) dans la direction d'extension de celle-ci.

4. Adaptateur de raccordement (10) selon l'une quelconque des revendications précédentes, **caractérisé en ce que** les nervures de retenue (14, 15) s'étendent respectivement sur toute la longueur des branches (21).

5. Ensemble de boîtiers à structure modulaire (100) composé d'au moins deux ou de plusieurs boîtiers (50) dont chaque boîtier (50) dispose d'un logement d'adaptateur de raccordement (52) sur une paroi latérale de boîtier plane (53), le logement d'adaptateur de raccordement (52) comprenant une ouverture ouverte vers le haut dans la paroi latérale de boîtier (53), et respectivement au moins une section de paroi latérale (54) limitant l'ouverture respectivement sur le côté, dans lequel les deux boîtiers (50) sont orientés l'un par rapport à l'autre de telle sorte que les logements d'adaptateur de raccordement (52) sont positionnés directement l'un à côté de l'autre, et un adaptateur de raccordement (10) selon l'une quelconque des revendications précédentes est inséré dans les logements d'adaptateur de raccordement (52) de telle sorte que deux bras de retenue (14, 15) de l'adaptateur de raccordement (10) saisissent la section de paroi respectivement latérale (54) par l'arrière et font saillie respectivement dans l'une des rainures (16).

6. Ensemble (100) selon la revendication 5, dans lequel deux boîtiers voisins (50) présentent respectivement deux logements d'adaptateur de raccordement (52) rattachés à une paroi latérale, et les deux boîtiers (50) sont reliés l'un à l'autre à l'aide de deux adaptateurs de raccordement (10).

7. Ensemble (100) selon la revendication 5 ou 6, dans lequel les boîtiers (50) présentent des couvercles (55) amovibles et démontables, et lors du montage des couvercles (55), les adaptateurs de raccordement (10) sont protégés contre un retrait de leur position de montage.

8. Ensemble (100) selon l'une quelconque des revendications 5 à 7, **caractérisé en ce que** les boîtiers sont parallélépipédiques avec respectivement deux parois latérales planes opposées en parallèle.

9. Procédé de montage d'un ensemble selon l'une quelconque des revendications 5 à 8, comprenant les étapes suivantes consistant à :
a. positionner au moins deux boîtiers (50) ouverts par le haut, à raccorder l'un à l'autre, de telle sorte que leurs logements d'adaptateur de raccordement (52) respectifs sont directement adjacents, et
b. monter par insertion chacun des adaptateurs de raccordement (10) selon l'une quelconque des revendications 1 à 4 par le haut dans les logements d'adaptateur de raccordement (52) de sorte que les deux boîtiers de connecteur enfichable (50) sont raccordés mécaniquement l'un à l'autre au moyen du ou des adaptateurs de raccordement (10).

10. Procédé selon la revendication 9, dans lequel, après le montage par insertion du ou des adaptateurs de raccordement (10), un couvercle est monté sur la face ouverte du boîtier de connecteur enfichable (50).
